# EUROPÄISCHE PATENTANMELDUNG

(11) **EP 2 341 328 A1**
(43) Veröffentlichungstag der Anmeldung: **06.07.2011**
(21) Anmeldenummer: 11000802.6
(22) Anmeldetag: 17.12.2009
(51) Int. Cl.: G01M 3/28, F16J 15/32

(54) **Dichtungsanordnung**

(62) Teilanmeldung aus: 09015598.7
(71) Anmelder: Carl Freudenberg KG, 69469 Weinheim (DE)
(72) Erfinder: Diekmann, Hans-Jürgen, 69488 Birkenau (DE); Schreiner, Marcel, 68259 Mannheim (DE); Mutterer, Heinz, 76532 Baden-Baden (DE)

(57) **Zusammenfassung**

Dichtungsanordnung, umfassend zwei Maschinenelemente (1, 2) und eine Dichtung (3), die zwischen den Maschinenelementen (1, 2) dichtend angeordnet ist, wobei die Dichtung (3) zwei gegeneinander abzudichtende Räume (4, 5) begrenzt, die jeweils mit einem abzudichtenden Medium (6, 7) zumindest teilweise gefüllt sind, wobei in dem ersten Raum (4) ein relativ höherer Druck als in dem zweiten Raum (5) herrscht und wobei auf der dem zweiten Raum (5) zugewandten Seite der Dichtung (3) ein Modul (8) zur Erfassung einer Leckage (9) der Dichtung (3) angeordnet ist. Das Modul (8) umfasst eine Differenzdruck gesteuerte Membran (24) und einen Wegsensor (25), der mit einer Auswerte-Einheit (12) signalleitend verbunden ist, wobei die Membran (24) in Richtung des Wegsensors (25) hin-und herbeweglich ausgebildet und dem Wegsensor (25) zur Erfassung des Wegs der Membran (24) benachbart zugeordnet ist.

## Beschreibung

### Technisches Gebiet

Die Erfindung betrifft eine Dichtungsanordnung, umfassend zwei Maschinenelemente und eine Dichtung, die zwischen den Maschinenelementen dichtend angeordnet ist, wobei die Dichtung zwei gegeneinander abzudichtende Räume begrenzt, die jeweils mit einem abzudichtenden Medium zumindest teilweise gefüllt sind, wobei in dem ersten Raum ein relativ höherer Druck als in dem zweiten Raum herrscht und wobei auf der dem zweiten Raum zugewandten Seite der Dichtung ein Modul zur Erfassung einer Leckage der Dichtung angeordnet ist.

### Stand der Technik

Eine solche Dichtungsanordnung mit Leckageerfassung ist aus der EP 1 916 509 A1 bekannt. Das erste Medium im ersten Raum ist durch eine Gleitringdichtung und das zweite Medium im zweiten Raum durch einen Radialwellendichtring abgedichtet, wobei die Gleitringdichtung und der Radialwetlendichtring eine abzudichtende Oberfläche des ersten Maschinenelements dichtend umschließen. Axial zwischen den einander benachbart zugewandten Stirnseiten von Gleitringdichtung und Radialwellendichtring ist ein Modul in Form eines weiteren Dichtrings angeordnet, wobei zur Detektierung einer Leckage der Gleitringdichtung und /oder des weiteren Dichtrings eine Leckagesensor und ein Leckagereservoir vorgesehen sind. Das Leckagereservoir ist durch eine Vliesstoffscheibe gebildet, die im Wesentlichen konzentrisch zur abzudichtenden Oberfläche des ersten Maschinenelements angeordnet ist. Leckage wird durch das Leckagereservoir aufgenommen, durch den Leckagesensor detektiert und durch den Leckagesensor optisch und / oder akustisch angezeigt. In einer elektronischen Auswerte-Einheit wird ein elektrisches Signal erzeugt. Dabei ist allerdings zu beachten, dass das durch die Vliesstoffscheibe gebildete Leckagereservoir nur einmal verwendbar ist. Ist das Leckagereservoir vollgesaugt, muss das gesamte Sensorsystem ausgetauscht werden.

### Darstellung der Erfindung

Der Erfindung liegt die Aufgabe zugrunde, eine Dichtungsanordnung der vorbekannten Art derart weiter zu entwickeln, dass zur Detektierung der Leckage auf ein saugfähiges Leckagedepot verzichtet werden kann und dass ein zur Erfassung einer Leckage verwendetes Modul kontinuierlich verwendbar ist, auch dann, wenn zuvor Leckage durch das Modul bereits detektiert worden ist.

Außerdem sollen auf einfache Weise auch Aussagen über den Grad der Dichtungsschädigung getroffen werden können. Ein leckagefreier Raum in der Dichtungsanordnung zur Detektierung der Leckage soll nicht erforderlich sein.

Außerdem soll die beanspruchte Dichtungsanordnung für eine Dichtfunktionsüberwachung bei Abdichtung zwischen mehreren Fluiden geeignet sein.

Diese Aufgabe wird erfindungsgemäß durch die Merkmale von Anspruch 1 gelöst. Auf vorteilhafte Ausgestaltungen nehmen die Unteransprüche Bezug.

Zur Lösung der Aufgabe ist es vorgesehen, dass das Modul eine Differenzdruck gesteuerte Membran und einen Wegsensor umfasst, der mit einer Auswerte-Einheit signalleitend verbunden ist und dass die Membran in Richtung des Wegsensors hin-und herbeweglich ausgebildet und dem Wegsensor zur Erfassung des Wegs der Membran benachbart zugeordnet ist.

Der Sensor ist als differenzdruckgesteuerte Membran mit Wegsensor ausgebildet, wobei die Membran in Richtung des Wegsensors hin- und herbeweglich ausgebildet und dem Wegsensor zur Erfassung des Wegs der Membran benachbart zugeordnet ist. Die Membran kann aus einem elastisch nachgiebigen Werkstoff bestehen, beispielsweise aus einem elastomeren Werkstoff. Solche Werkstoffe sind in großer Anzahl mit unterschiedlichsten Gebrauchseigenschaften kostengünstig verfügbar. Die Gebrauchseigenschaften können dadurch besonders leicht an die jeweiligen Gegebenheiten des Anwendungsfalls angepasst werden.

Die differenzdruckgesteuerte Membran ist bevorzugt ein integraler Bestandteil der Dichtung, wobei sich die Bewegung/Durchbiegung der Membran in Abhängigkeit des Differenzdrucks zwischen den beiden Räumen verändert, Bei einer Leckage des abzudichtenden Mediums aus dem abzudichtenden ersten Raum mit dem vergleichsweise höheren Druck sorgt diese Leckage für eine Druckentlastung im ersten Raum und einen Druckanstieg im zweiten Raum, der mit dem vergleichsweise geringen Druck beaufschlagt ist. Durch diese Druckveränderung zwischen den beiden Räumen, die auch auf die Membran wirkt, bewegt sich im geschilderten Fall die Membran in Richtung des ersten Raums von dem Wegsensor weg. Dieser sich verändernde Abstand wird vom Wegsensor erfasst und an die Auswerte-Einheit übermittelt. Die Intensität der Leckage ist eine Funktion des Abstands zwischen dem Wegsensor, der beispielsweise durch einen optischen Sensor gebildet sein kann, und der Membran. Die Überwachung der Leckage erfolgt dabei kontinuierlich.

Die Dichtung kann als Radialwellendichtring ausgebildet sein, wobei die Membran im Radialflansch des Radialwellendichtrings angeordnet ist. Für viele Anwendungsfälle sind Radialwellendichtringe in vielen Abmessungen kostengünstig verfügbar. Für die Membran wird kein zusätzlicher Bauraum benötigt und auch der Montageaufwand unterscheidet sich von dem Montageaufwand von Radialwellendichtringen ohne differenzdruckgesteuerte Membran nicht.

Häufig ist es für den Betreiber einer Dichtungsanordnung nicht nur interessant, eventuell auftretende Leckage innerhalb der Dichtungsanordnung zu detektieren, um Rückschlüsse auf den Grad der Dichtungsschädigung ziehen zu können, sondern auch die Erfassung von Drehzahl, Drehrichtung, Absolutwinkel und / oder Drehmoment ist häufig von Interesse.

Das Modul kann deshalb mit einem Multipolencoder basierten Geber und / oder einem zugehörigen Magnetfeldsensor eine vormontierbare erste Einheit bilden.

Geber und / oder Magnetfeldsensor können auf der dem zweiten Raum zugewandten Seite des Moduls angeordnet sein. Diese dem zweiten Raum zugewandte Seite des Moduls ist die Niederdruckseite.

Generell kann der Magnetfeldsensor dem Geber in radialer oder axialer Richtung zugeordnet sein. Häufig ist bei den genannten Dichtungsanordnungen der Bauraum in axialer Richtung begrenzt, wobei In radialer Richtung ohnehin Abmessungen vorgesehen sind, die zur Montage der Dichtung, insbesondere des Radialwellendichtrings ausreichen müssen.

Unter Berücksichtigung der Vorgabe "geringe Abmessungen in axialer Richtung" ist der Geber vom Magnetfeldsensor bevorzugt außenumfangsseitig mit radialem Abstand umschlossen.

Der Geber kann zur Erfassung von Drehzahl, Drehrichtung, Absolutwinkel und /oder Drehmoment ausgebildet sein.

Das Modul und die Dichtung können eine vormontierbare zweite Einheit bilden. Hinsichtlich einer einfachen Montage der Dichtungsanordnung und im Hinblick auf eine Reduzierung der Gefahr von Montagefehlem hat sich eine Zusammenfassung zu einer vormontierbaren Einheiten als vorteilhaft erwiesen, insbesondere dann, wenn nicht nur das Modul mit dem Geber und / oder dem zugehörigen Magnetfeldsensor eine vormontierbare erste Einheit bildet, sondern auch, wenn zusätzlich zu den genannten Bauteilen die Dichtung vorgesehen ist, die die erste Einheit zur vormontierbaren zweiten Einheit komplettiert.

### Kurzbeschreibung der Zeichnung

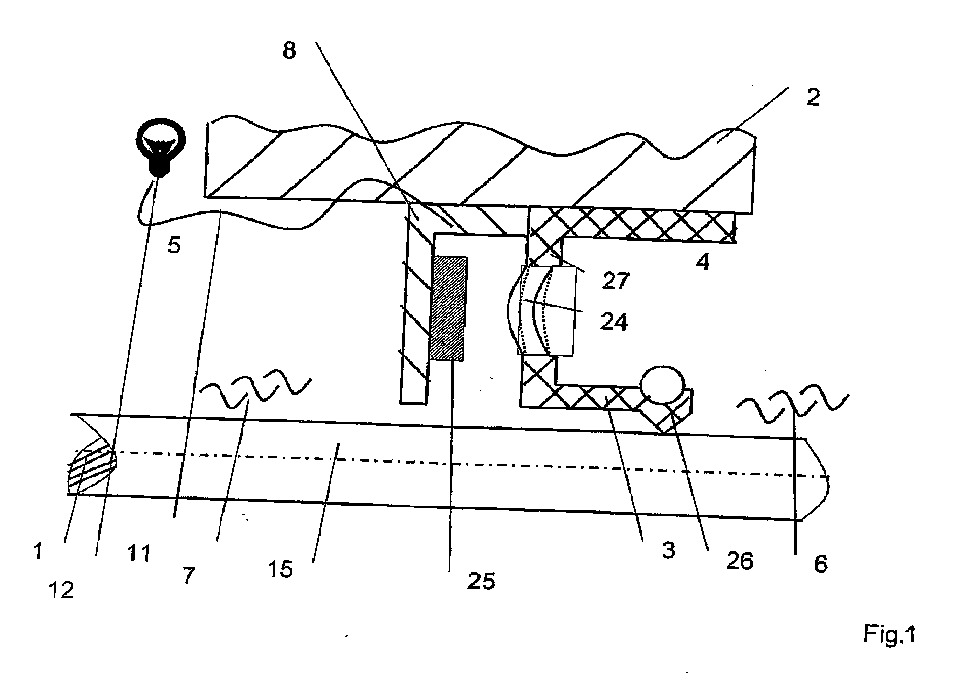

Ein Ausführungsbeispiel der beanspruchten Dichtungsanordnung ist nachfolgend anhand von Figur 1 schematisch dargestellt und wird im Folgenden näher beschrieben.

Es zeigt:
Fig. 1 ein Ausführungsbeispiel, bei dem der Sensor als differenzdruckgesteuerte Membran mit Wegsensor ausgebildet ist.

### Ausführung der Erfindung

In Fig. 1 ist ein Ausführungsbeispiel der erfindungsgemäßen Dichtungsanordnung gezeigt. Die Dichtung 3 ist als Radialwellendichtring 26 ausgebildet und zwischen den beiden Maschinenelementen 1, 2 dichtend angeordnet. Das erste Maschinenelement 1 wird durch eine Welle gebildet, das zweite Maschinenelement 2 von einem Gehäuse, das das erste Maschinenelement 1 mit radialem Abstand umschließt. Der erste abzudichtende Raum 4 befindet sich motorseitig der Dichtung 3, der zweite abzudichtende Raum 5 getriebeseitig der Dichtung 3, wobei der motorseitige erste Raum 4 mit Motoröl, der getriebeseitig angeordnete zweite Raum 5 mit Getriebeöl gefüllt ist. Der motorseitige erste Raum 4 ist mit höheren Druck beaufschlagt als der getriebeseitige zweite Raum 5. Beispielsweise beträgt der Druck im ersten Raum 4 3 bar, im zweiten Raum 5 1 bar.

Auf der dem zweiten Raum 5 axial zugewandten Seite der Dichtung 3 ist das Modul 8 zur Erfassung einer Leckage 9 der Dichtung 3 angeordnet.

Das Modul 8 umfasst eine differenzdruckgesteuerte Membran 24 und einen Wegsensor 25, die einander mit axialem Abstand benachbart zugeordnet sind. Der Wegsensor 25 ist signalleitend mit der Auswerte-Einheit 12 verbunden.

Im Normalfall, wenn die Dichtung 3 In Ordnung ist, ist die Druckdifferenz zwischen den beiden Räumen 4, 5 am Größten. Die Dichtung 3 weist keine Leckage auf. Dieser Betriebszustand ist mit durchgezogenen Linien gezeigt. Die Membran 24 ist axial in Richtung des Wegsensors 25 vorgewölbt und diesem am weitesten angenähert.

Wird die Dichtung 3 demgegenüber undicht, so dass eine Leckage 9 vom abzudichtenden Raum 4 höheren Drucks in Richtung des abzudichtenden Raums 5 niedrigeren Drucks strömt, verringert sich durch die Undichtigkeit die Druckdifferenz zwischen diesen beiden Räumen 4, 5. Die Membran 24, die im gezeigten Ausführungsbeispiel aus einem elastomeren Werkstoff besteht, nimmt die gestrichelt dargestellte Form an. Der sich vergrößernde axiale Abstand zwischen der Membran 24 und dem Wegsensor 25 wird von dem Wegsensor 25 erkannt und an die Auswerte-Einheit 12 weitergegeben. In Abhängigkeit vom axialen Abstand zwischen der Membran 24 und dem Wegsensor 25 erkennt der Betreiber der Dichtungsanordnung die Intensität der Leckage. Diese ist eine Funktion des Abstands zwischen Wegsensor 25, der beispielsweise als optischer Sensor ausgebildet sein kann, und der Membran 24. Die Überwachung der Dichtungsanordnung erfolgt kontinuierlich.

## Patentansprüche

1. Dichtungsanordnung, umfassend zwei Maschinenelemente (1, 2) und eine Dichtung (3), die zwischen den Maschinenelementen (1, 2) dichtend angeordnet ist, wobei die Dichtung (3) zwei gegeneinander abzudichtende Räume (4, 5) begrenzt, die jeweils mit einem abzudichtenden Medium (6, 7) zumindest teilweise gefüllt sind, wobei in dem ersten Raum (4) ein relativ höherer Druck als in dem zweiten Raum (5) herrscht und wobei auf der dem zweiten Raum (5) zugewandten Seite der Dichtung (3) ein Modul (8) zur Erfassung einer Leckage (9) der Dichtung (3) angeordnet ist, **dadurch gekennzeichnet, dass** das Modul (8) eine Differenzdruck gesteuerte Membran (24) und einen Wegsensor (25) umfasst, der mit einer Auswerte-Einheit (12) signalleitend verbunden ist und dass die Membran (24) in Richtung des Wegsensors (25) hin-und herbeweglich ausgebildet und dem Wegsensor (25) zur Erfassung des Wegs der Membran (24) benachbart zugeordnet ist.

2. Dichtungsanordnung nach Anspruch 1, **dadurch gekennzeichnet, dass** die Membran (24) aus einem elastisch nachgiebigen Werkstoff besteht.

3. Dichtungsanordnung nach einem der Ansprüche 1 oder 2, **dadurch gekennzeichnet, dass** die Membran (24) aus einem elastomeren Werkstoff besteht.

4. Dichtungsanordnung nach einem der Ansprüche 1 bis 3, **dadurch gekennzeichnet, dass** die Membran (24) einen Bestandteil der Dichtung (3) bildet.

5. Dichtungsanordnung nach Anspruch 4, **dadurch gekennzeichnet, dass** die Dichtung (3) als Radialwellendichtring (26) ausgebildet ist und dass die Membran (24) im Radialflansch (27) des Radialwellendichtrings (26) angeordnet ist.

6. Dichtungsanordnung nach einem der Ansprüche 1 bis 5, **dadurch gekennzeichnet, dass** das Modul (8) mit einem Multipolencoder basierten Geber (28) und/oder einem zugehörigen Magnetfeldsensor (29) eine vormontierbare erste Einheit (30) bildet.

7. Dichtungsanordnung nach Anspruch 6, **dadurch gekennzeichnet, dass** der Geber (28) und/oder der Magnetfeldsensor (29) auf der dem zweiten Raum (5) zugewandten Seite des Moduls (8) angeordnet sind.

8. Dichtungsanordnung nach einem der Ansprüche 6 oder 7, **dadurch gekennzeichnet, dass** der Geber (28) vom Magnetfeldsensor (29) außenumfangsseitig mit radialem Abstand umschlossen ist.

9. Dichtungsanordnung nach einem der Ansprüche 6 bis 8, **dadurch gekennzeichnet, dass** der Geber (28) zur Erfassung von Drehzahl, Drehrichtung, Absolutwinkel und/oder Drehmoment ausgebildet ist.

10. Dichtungsanordnung nach einem der Ansprüche 1 bis 9, **dadurch gekennzeichnet, dass** die Dichtung (3) als Radialwellendichtring (26) ausgebildet ist.

11. Dichtungsanordnung nach einem der Ansprüche 1 bis 10, **dadurch gekennzeichnet, dass** das Modul (8) und die Dichtung (3) eine vormontierbare zweite Einheit (31) bilden
